# EUROPEAN PATENT APPLICATION

(11) **EP 1 921 212 A2**
(43) Date of publication of application: **14.05.2008**
(21) Application number: 07111699.0
(22) Date of filing: 04.07.2007
(51) Int. Cl.: E02F 5/32, A01G 23/06

(54) **Method and device for disposing of underground obstacles, and a knife for use with such a device**

(30) Priority: 13.11.2006 NL 1032857
(71) Applicant: van Vulpen, Jan, 6603 DR Alverna (NL)
(72) Inventor: van Vulpen, Jan, 6603 DR Alverna (NL)
(74) Representative: Bakker, Hendrik

(57) **Abstract**

The invention relates to a method for disposing of underground obstacles, such as tree roots, wherein an at least substantially sickle-like knife (2) provided on both sides with a cutting edge (6,7) is attached to an excavator arm of an excavating machine (1), whereafter the knife (2) is moved through the ground. One side (7) of the knife (2) is preferably provided with sawteeth (5), so that obstacles can be sawn through using sawing movements performed by the excavator arm.

## Description

The invention relates to a method for disposing of underground obstacles, such as roots and/or tree-stumps, wherein an at least substantially sickle-like knife provided on both sides with a cutting edge is attached to an excavator arm of an excavating machine, whereafter the knife is moved through the ground.

Such a method is new. For the purpose of removing the underground part of a tree or shrub it is possible in the prior art to opt for digging out or cutting out. Both methods are laborious and time-consuming and often disastrous for the environment of the underground part to be removed. In addition, it is sometimes almost impossible to apply the known methods because the underground part is difficult to reach. The method according to the invention obviates all these drawbacks and is also readily applicable for instance when roots close to or against a foundation have to be removed.

A very favourable realization of the inventive method has the feature that a concave cutting edge of the knife is provided with sawteeth, and that obstacles are at least partially sawn through using sawing movements performed by the excavator arm.

A further favourable realization has the feature that a convex cutting edge of the knife is provided with serrations, and that at least partially sawn-through obstacles are pulled loose using pulling and pushing movements performed by the excavator arm.

The invention also relates to a device for disposing of underground obstacles, such as tree roots, comprising an excavating machine provided with a coupling member and a coupling plate. The inventive device has the feature that the coupling plate is provided with at least one at least substantially sickle-like knife provided on both sides with a cutting edge. Using the knife the underground obstacles are pulled to pieces or cut through, whereafter an excavator bucket can be coupled to the coupling member and the parts of the underground obstacle that have been pulled to pieces or cut into pieces can easily be removed.

A favourable embodiment of the inventive device has the feature that the knife is provided with a welded-on flange provided with fixing holes, so that the knife can easily be fitted or replaced with a knife of another type. The knife is preferably provided in at least two welded-on shoring plates for lateral support of the knife.

A further, very favourable embodiment of the inventive device has the feature that a concave cutting edge is provided with sawteeth. It is then possible to saw at least partially into even very thick roots by causing the excavator arm of the excavating machine to perform several sawing movements. Furthermore, a convex cutting edge is then preferably provided with serrations which take a much larger form than the sawteeth. Using these serrations a partly sawn-through root can then be pulled to pieces in simple manner by causing the excavator arm to perform a pulling movement.

A further favourable embodiment of the inventive method has the feature that the sawteeth and the serrations are at least substantially of symmetrical form, so that sawing movements and pulling movements can effectively be carried out in two directions.

The invention also relates to a knife for disposing of roots and/or tree-stumps for use in a device as specified in the foregoing paragraphs. The knife herein has dimensions which are chosen in proportion to the excavating machine. For a so-called mini-excavator a knife with a length of for instance 45 cm can be utilized, and for large excavating machines the length can amount to for instance 150 cm.

The invention will now be further elucidated with reference to the following figures, wherein:
- Fig. 1: shows schematically a mini-excavator equipped with a knife according to the invention;
- Fig. 2: shows in more detail a side view of a possible embodiment of a knife according to the invention;
- Fig. 3: shows in more detail a side view of an alternative embodiment of a knife according to the invention;
- Fig. 4A: shows in more detail a front view of a possible embodiment of a knife according to the invention;
- Fig. 4B: shows in more detail a bottom view of a possible embodiment of a knife according to the invention.

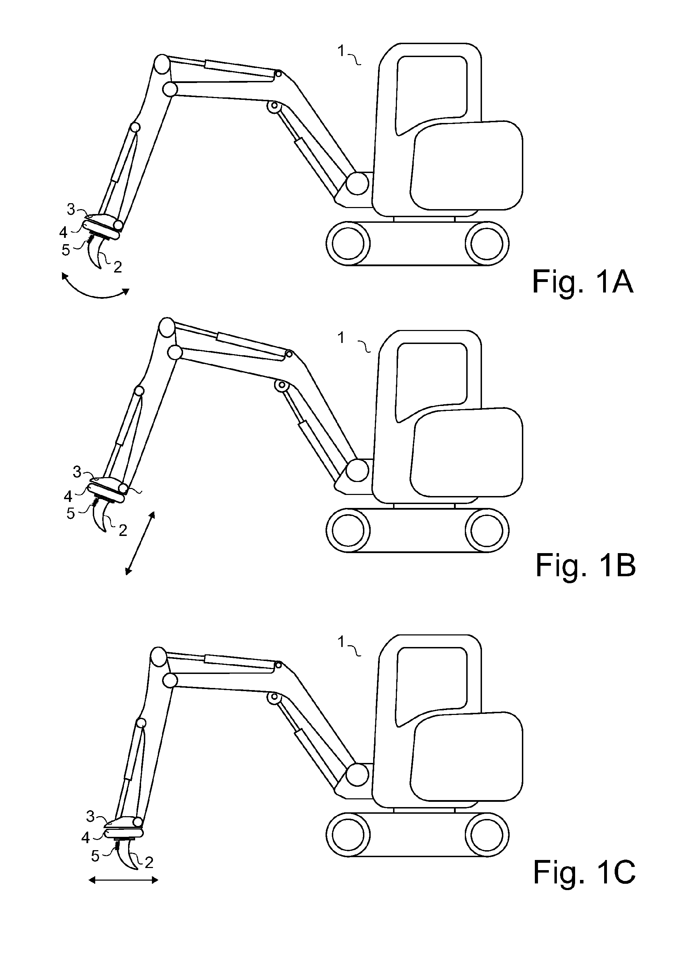

Fig. 1 shows a schematically a mini-excavator 1 equipped with a knife 2 according to the invention. Mini-excavator 1 is provided with a coupling member 3, here shown schematically, which can generally be embodied differently for different mini-excavators, and knife 2 is mounted removably on a coupling plate 4 which is generally supplied by the supplier of the mini-excavator. In Fig. 1A knife 2 makes a cutting movement which suffices to cut through relatively thin roots present in the ground. In Fig. 1 B knife 2 makes a sawing movement with which it is possible to effectively saw through or saw into relatively thick roots present in the ground. If relatively thick roots must be removed, a knife 2 is preferably mounted that is provided with sawteeth. In Fig. 1C knife 2 makes a pulling movement. In order to enhance the effect of this pulling movement, knife 2 is provided with a serrated edge 5 with coarse teeth with which for instance a partially sawn-through root can be pulled to pieces. Once a root system present in the ground has been sufficiently cut, sawn and/or pulled to pieces, coupling plate 4 is then uncoupled and a standard excavator bucket is attached with which the root parts with adhering soil can be removed.

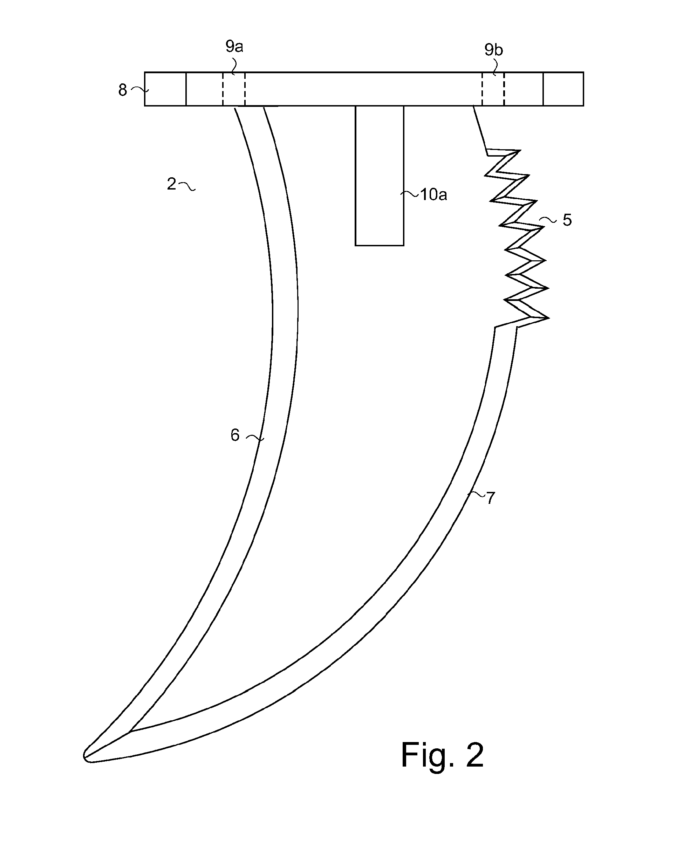

Fig. 2 shows in more detail a side view of a possible embodiment of a knife 2 according to the invention. Knife 2 is provided with a concave cutting edge 6 which is provided here with a smooth cutting face, and a convex cutting edge 7 which is likewise provided with a smooth cutting face which, however, is provided on the upper part with a serrated edge 5 with coarse teeth suitable for penetrating into a root and providing sufficient grip for the purpose of pulling apart this root using mini-excavator 1. Right at the top knife 2 is provided with a welded-on flange 8 provided with fixing holes 9a,9b,9c,9d, of which only fixing holes 9a,9b are visible in this figure, with which the flange 8 can be fixed to coupling plate 4. Further provided are two welded-on shoring plates 10a,10b, of which only shoring plate 10a is visible in this figure, which laterally support the knife 2.

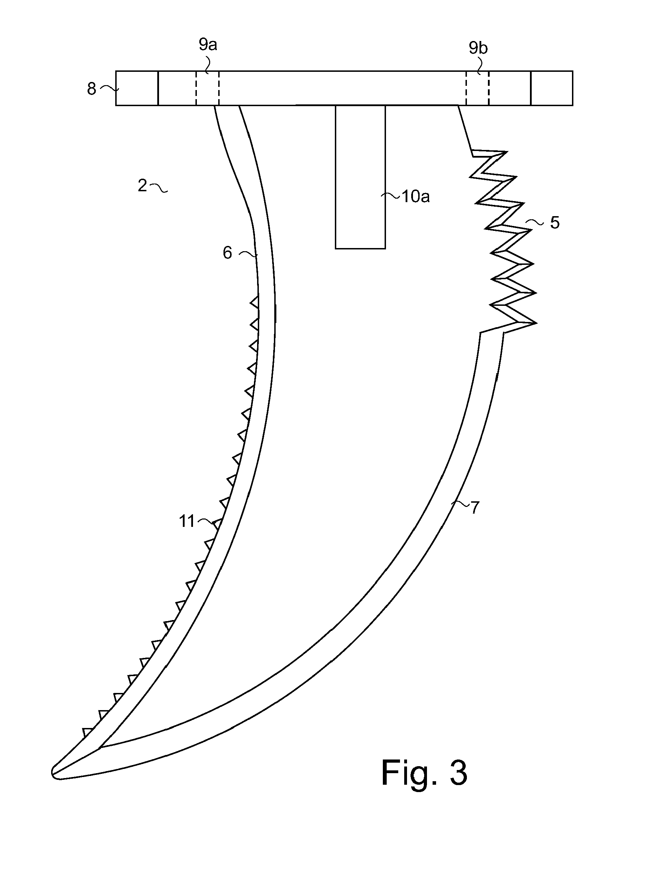

Fig. 3 shows in more detail a side view of an alternative embodiment of a knife 2 according to the invention. Knife 2 is provided with a concave cutting edge 6 which is here provided with a row of sawteeth 11 suitable for sawing through a root using mini-excavator 1. Knife 2 is for instance manufactured from carbon steel and the teeth are hardened in a per se known manner, although it is also possible to embed in knife 2 in a per se known manner a row of teeth manufactured from tungsten or widia or other very hard material. Knife 2 is further provided with a convex cutting edge 7 with a smooth cutting face which is provided at the top with a serrated age 5 with coarse teeth suitable for penetrating into a root and providing sufficient grip to pull this root to pieces using mini-excavator 1. Right at the top the knife 2 is provided with a welded-on flange 8 provided with fixing holes 9a,9b,9c,9d, of which only fixing holes 9a,9b are visible in this figure, with which flange 8 can be fixed to coupling plate 4. Further provided are two welded-on shoring plates 10a,10b, of which only shoring plate 10a is visible in this figure, which laterally support the knife 2.

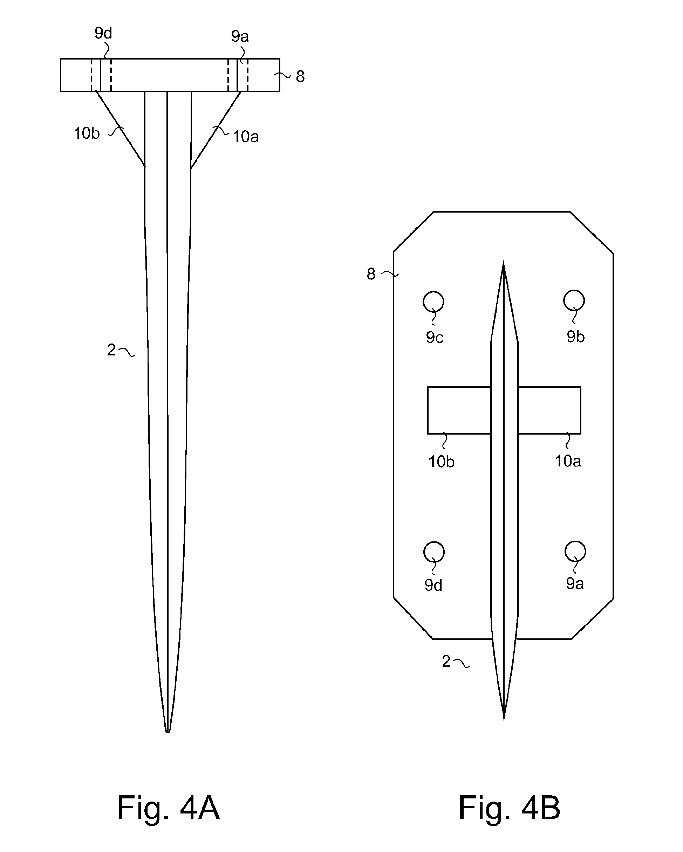

Fig. 4A shows in more detail a front view of a possible embodiment of a knife 2 according to the invention, with concave cutting edge 6, in addition to welded-on flange 8, holes 9a,9b,9c,9d and welded-on shoring plates 10a,10b.

Fig. 4B shows in more detail a bottom view of a possible embodiment of a knife 2 according to the invention, with concave cutting edge 6, in addition to welded-on flange 8, holes 9a,9b,9c,9d and welded-on shoring plates 10a,10b.

It is of course also possible to mount more than one knife 2 on a coupling plate 4, whereby it becomes possible in one movement to clear a relatively wide piece of ground of underground roots. This is advisable for instance when clearing underground obstacles left behind after the harvesting of Christmas trees. A relatively large knife is then for instance mounted on coupling plate 4, flanked by two smaller knives which are preferably placed slightly behind the relatively large knife. The relatively large knife then severs the roots, whereafter the relatively small knives pull the root parts out of the ground. If desired, such a coupling plate can herein be mounted on a lifting device of a tractor, whereafter the tractor removes the root parts from the ground as it travels. A tubular frame, on which the knives are mounted, can also be utilized instead of a coupling plate. Furthermore, such a coupling plate can advantageously be utilized for the purpose of cutting open solidly compacted ground possibly mixed with manure, as for instance found at riding stables.

## Claims

1. Method for disposing of underground obstacles, such as tree roots, wherein an at least substantially sickle-like knife provided on both sides with a cutting edge is attached to an excavator arm of an excavating machine, whereafter the knife is moved through the ground.

2. Method as claimed in claim 1, **characterized in that** a concave cutting edge of the knife is provided with sawteeth, and that obstacles are at least partially sawn through using sawing movements performed by the excavator arm.

3. Method as claimed in claim 2, **characterized in that** a convex cutting edge of the knife is provided with serrations, and that at least partially sawn-through obstacles are pulled loose using pulling and pushing movements performed by the excavator arm.

4. Device for disposing of underground obstacles, such as tree roots, comprising an excavating machine provided with a coupling member and a coupling plate, **characterized in that** the coupling plate is provided with at least one at least substantially sickle-like knife provided on both sides with a cutting edge.

5. Device as claimed in claim 4, **characterized in that** the knife is provided with a welded-on flange provided with fixing holes.

6. Device as claimed in claim 5, **characterized in that** the knife is provided in at least two welded-on shoring plates for lateral support of the knife.

7. Device as claimed in claim 4, 5 or 6, **characterized in that** a concave cutting edge is provided with sawteeth.

8. Device as claimed in claim 7, **characterized in that** a convex cutting edge is provided with serrations.

9. Device as claimed in claim 8, **characterized in that** the sawteeth and the serrations are at least substantially of symmetrical form.

10. Knife for disposing of roots and/or tree-stumps for use in a device as claimed in any of the claims 4-9.
